# EUROPEAN PATENT APPLICATION

(11) **EP 1 853 055 A1**
(43) Date of publication of application: **07.11.2007**
(21) Application number: 05719490.4
(22) Date of filing: 24.02.2005
(51) Int. Cl.: H04M 15/00, H04L 12/56, H04M 11/00

(54) **INFORMATION PROCESSING DEVICE, CIRCUIT DISCONNECTING PROGRAM FOR INFORMATION PROCESSING DEVICE, AND CIRCUIT DISCONNECTING METHOD FOR INFORMATION PROCESSING DEVICE**

(71) Applicant: Fujitsu Ltd., Kawasaki-shi, Kanagawa 211-8588 (JP)
(72) Inventor: TAKI, Yoshihiko, Fujitsu Limited, Kawasaki-shi, Kanagawa 211-8588 (JP)
(74) Representative: Cooper-Rolfe, Elizabeth Louise
(86) International application number: PCT/JP2005/003040
(87) International publication number: WO 2006/090461

(57) **Abstract**

It is an object to provide an information processing apparatus that can reduce an unnecessary charge by highly reliably releasing a wireless line when the line is unnecessary to be connected. The information processing apparatus (101) is configured to be connected, as a result of a line connection by using a PPP, to a network system charged based on a connection period from establishment of the line connection to release of the line, and includes an input monitoring unit (60) that monitors a line-release operation input signal and a packet transmission/reception completion signal, and a communication control unit (70) that releases the line, when at least one of the line-release operation input and the packet transmission/reception completion is detected.

## Description

### TECHNICAL FIELD

The present invention generally relates to an information processing apparatus configured to be connected to a network by a point-to-point protocol (PPP). The present invention specifically relates to an information processing apparatus configured to be connected to a time-based charging network system of charging based on a line usage period, a line-release program for the information processing apparatus, and a line-release method for the information processing apparatus.

### BACKGROUND ART

A PPP has been used as a protocol for connecting an information processing apparatus to a network via a line such as a telephone line. The PPP is a protocol for connecting two points, that is, a remote communication station and a user. The PPP works at a data link layer, and is capable of authentication or compression. At a network layer or higher layers, it is possible to use various protocols such as a TCP/IP and an IPX/SPX. The PPP is used for personal computer communications or Internet accesses. For example, when the user intends to perform the personal computer communications or connect to the Internet, the PPP is used for connecting the user to the communication station such as a web server via, for example, a dial-up connection. A charging system employed by such a network system using the PPP as a protocol is often a packet-based charging system in which a communication fee is charged depending on an amount of communicated data (packets) (for example, see Patent document 1).

However, it is expected that, for the network system using the PPP as a protocol, a time-based charging system appears in a course of full transition to a flat-rate system in the near future. The flat-rate system indicates the system that constantly charges a flat-rate usage fee regardless of an amount of communicated packets or a connection period of the line. The time-based system indicates the system that charges based on a connection period of the line regardless of an amount of communicated packets.

Patent document 1: Japanese Patent Application Laid-open No. H10-42271

### DISCLOSURE OF INVENTION

### PROBLEM TO BE SOLVED BY THE INVENTION

However, the time-based system can cause the following problem, for example, while a user is browsing a Web page (home page) by the information processing apparatus after accessing the Web server. That is, while the once-displayed (downloaded) home page is being browsed, even though a communicated data amount (amount of packets) is zero, the usage fee is charged as long as the line is connected (the PPP link is being established), unless the user voluntarily provides line-release operation input.

Such a problem can be avoided if the user voluntarily provides the line-release operation input to release the line. However, it is troublesome for the user to provide the line-release operation input frequently. In some cases, for example, when the user enters an area with a poor radio wave condition such as in a tunnel while the PPP link is kept established, it can be impossible to release the line normally, even though the user tries to release the line voluntarily. In such cases, a fee is charged even for the period of the line being unused.

The present invention has been achieved to solve the above problems in the conventional technology and it is a first object of the present invention to provide an information processing apparatus that can reduce unnecessary charge by highly reliably releasing a line when connection of the line is not required, a line-release program for the information processing apparatus, and a line-release method for the information processing apparatus. It is a second object to provide an information processing apparatus that can avoid unnecessary charge under the poor radio wave condition as much as possible, a line-release program for the information processing apparatus, and a line-release method on the information processing apparatus.

### MEANS FOR SOLVING PROBLEM

To overcome the above problems and achieve the objects mentioned above, according to a first aspect of the present invention, an information processing apparatus configured to be connected, as a result of a line connection by using a PPP, to a network system in which charge is based on a connection period from establishment of the line connection to release of a line, includes an input monitoring unit that monitors a line-release operation input signal and a packet transmission/reception completion signal, and a communication control unit that releases the line upon receiving at least one of the line-release operation input signal and the packet transmission/reception completion signal. With such a configuration, the line is released in response to the packet transmission/reception completion signal transmitted from the network system in addition to the line-release operation input provided by the user. This makes it possible to highly reliably release the line when connection of the line is not required, which results in reducing the unnecessary charge.

According to a second aspect of the present invention, in the first aspect, the information processing apparatus further includes a timer unit that counts time since packet transmission/reception is complete. The input monitoring unit releases the line, when a predetermined period has passed since the packet transmission/reception is complete, regardless of whether the line-release operation input signal is received. With such a configuration, even though the user forgets to provide the line-release operation input, the line is released after the predetermined period without fails, which makes it possible to surely save the wasteful line usage period. Moreover, because the line is not released as soon as the packet transmission/reception is complete, it is possible to prevent repeating a set of a line connection and a line release with a short interval.

According to a third aspect of the present invention, in the first or second aspect, the input monitoring unit generates a trigger upon receiving at least one of the line-release operation input signal and the packet transmission/reception completion signal. The communication control unit transmits a plurality of line-release requests at predetermined intervals in response to the trigger. With such a configuration, frequency of the line-release request that fails to arrive at the other side can decrease, which makes it possible to reduce the unnecessary charge under the poor wave condition.

According to a fourth aspect of the present invention, in the first or second aspect, the line is a wireless line. The communication control unit measures an electric field intensity of a received radio wave, and, when the electric field intensity is equal to or larger than a threshold, releases the line. With such a configuration, even when the wave condition turns to be poor while the line connection is kept established, the line release is performed when the radio condition turns to be good, which makes it possible to minimize the unnecessary charge.

According to a fifth aspect of the present invention, in the fourth aspect, the communication control unit includes a transmission buffer that buffers a line-release request, and a reception electric-field intensity detecting unit that measures the electric field intensity of the received radio wave, and transmits, when the electric field intensity is equal to or larger than the threshold, the line-release request buffered by the transmission buffer. With such a configuration, the line-release request is transmitted as soon as the wave condition turns to be good, which makes it possible to minimize the unnecessary charge.

According to a sixth aspect of the present invention, a line release program for an information processing apparatus configured to be connected, as a result of a line connection by using a PPP, to a network system in which charge is based on a connection period from establishment of the line connection to release of a line, describes a procedure including monitoring a line-release operation input signal and a packet transmission/reception completion signal based on an output signal from an input monitoring unit that monitors the line-release operation input signal and the packet transmission/reception completion signal, and, when at least one of the line-release operation input signal and the packet transmission/reception completion signal is received, releasing the line. With such a configuration, the line is released based on the line-release operation input provided by the user and the packet transmission/reception completion signal transmitted from the network system. This makes it possible to save the wasteful line usage period, and charge properly.

According to a seventh aspect of the present invention, in the sixth aspect, the line release program for the information processing apparatus further describes a procedure of counting time since packet transmission/reception is complete, and, when a predetermined period has passed since the packet transmission/reception is complete, releasing the line regardless of whether the line-release operation input signal is received. With such a configuration, even though the user forgets to provide the line-release operation input, the line is released after the predetermined period without fails, which makes it possible to surely save the wasteful line usage period. Moreover, because the line is not released as soon as the packet transmission/reception is complete, it is possible to prevent repeating a set of a line connection and a line release with a short interval.

According to an eighth aspect of the present invention, in the sixth or seventh aspect, the line release program for the information processing apparatus further describes a procedure of transmitting a plurality of line-release requests at predetermined intervals when at least one of the line-release operation input signal and the packet transmission/reception completion signal is received. With such a configuration, it does not happen that the line-release request fails to arrive at the other side, which makes it possible to reduce the unnecessary charge under the poor wave condition.

According to a ninth aspect of the present invention, in the sixth or seventh aspect, the line is a wireless line. The line release program further describes a procedure of reading a result of detection by a reception electric-field intensity detecting unit that measures an electric field intensity of a received radio wave, and, when the reception electric-field intensity is equal to or larger than a threshold, releasing the line. With such a configuration, even when the wave condition turns to be poor while the line connection is kept established, the line release is performed when the radio condition turns to be good, which makes it possible to minimize the unnecessary charge.

According to a tenth aspect of the present invention, in the ninth aspect, the line release program for the information processing apparatus further describes a procedure of buffering a line-release request in a transmission buffer, and, when the electric-field intensity is equal to or larger than the threshold, transmitting the line-release request that is buffered in the transmission buffer. With such a configuration, the line-release request is transmitted as soon as the wave condition turns to be good, which makes it possible to minimize the unnecessary charge.

According to a eleventh aspect of the present invention, a line release method for an information processing apparatus configured to be connected, as a result of a line connection by using a PPP, to a network system in which charge is based on a connection period from establishment of the line connection to release of a line, includes monitoring a line-release operation input signal and a packet transmission/reception completion signal, and, when at least one of the line-release operation input signal and the packet transmission/reception completion signal is received, releasing the line. With such a configuration, the line is released in response to the packet transmission/reception completion signal transmitted from the network system in addition to the line-release operation input provided by the user, which makes it possible to save the wasteful line usage period, and charge properly.

According to a twelfth aspect of the present invention, in the eleventh aspect, the line release method for the information processing apparatus further includes counting time since packet transmission/reception is complete, and, when a predetermined period has passed since the packet transmission/reception is complete, releasing the line regardless of whether the line-release operation input signal is received. With such a configuration, even though the user forgets to provide the line-release operation input, the line is released after the predetermined period without fails, which makes it possible to surely save the wasteful line usage period. Moreover, because the line is not released as soon as the packet transmission/reception is complete, it is possible to prevent repeating a set of a line connection and a line release with a short interval.

According to a thirteenth aspect of the present invention, in the eleventh or twelfth aspect, the line release method for the information processing apparatus further includes transmitting a plurality of line-release requests at predetermined intervals when at least one of the line-release operation input signal and the packet transmission/reception completion signal is received. With such a configuration, it does not happen that the line-release request fails to arrive at the other side, which makes it possible to reduce the unnecessary charge under the poor wave condition.

According to a fourteenth aspect of the present invention, in the eleventh or twelfth aspect, the line is a wireless line. The line release method further includes measuring an electric field intensity of a received radio wave, and, when the reception electric-field intensity is equal to or larger than a threshold, releasing the line. With such a configuration, even when the wave condition turns to be poor while the line connection is kept established, the line release is performed when the radio condition turns to be good, which makes it possible to minimize the unnecessary charge.

According to a fifteenth aspect of the present invention, in the ninth aspect, the line release method for the information processing apparatus further includes buffering a line-release request, and, when the electric-field intensity is equal to or larger than the threshold, transmitting the line-release request buffered. With such a configuration, the line-release request is transmitted as soon as the wave condition turns to be good, which makes it possible to minimize the unnecessary charge.

Herein, "releasing a line" indicates requesting the network system to release the line, and more particularly, transmitting a line-release request to the network system.

### BRIEF DESCRIPTION OF DRAWINGS

[Fig. 1] Fig. 1 is a diagram of an information processing apparatus (mobile terminal device) according to a first embodiment of the present invention being connected to a network.
[Fig. 2] Fig. 2 is a functional block diagram of the mobile terminal device according to the first embodiment of the present invention.
[Fig. 3] Fig. 3 is a flowchart of the operation of a transmission/reception signal managing unit of the mobile terminal device according to the first embodiment of the present invention upon receiving a packet transmission/reception completion signal, and a sequence chart of TCP control-signal exchange between the mobile terminal device and a Web server when the packet transmission/reception completion signal is received.
[Fig. 4] Fig. 4 is a diagram of a relation between three modes and three selectors on the line release operation performed by the mobile terminal device according to the first embodiment of the present invention.
[Fig. 5] Fig. 5 is a flowchart of the operation of an operation input monitoring unit of the mobile terminal device according to the first embodiment of the present invention.
[Fig. 6] Fig. 6 is a flowchart of the operation of a communication control unit when such a signal is received that triggers transmission of a line-release request to a PPP control unit of the mobile terminal device according to the first embodiment of the present invention.
[Fig. 7] Fig. 7 is a functional block diagram of a mobile terminal device according to a second embodiment of the present invention.
[Fig. 8] Fig. 8 is a flowchart of the operation of a communication control unit when such a signal is received that triggers transmission of a line-release request to a PPP control unit of the mobile terminal device according to the second embodiment of the present invention.
[Fig. 9] Fig. 9 is a functional block diagram of a mobile terminal device according to a third embodiment of the present invention.
[Fig. 10] Fig. 10 is a flowchart of the operation of a communication control unit when such a signal is received that triggers transmission of a line-release request to a PPP control unit of the mobile terminal device according to the third embodiment of the present invention.

### EXPLANATIONS OF LETTERS OR NUMERALS

- 10: TCP control unit
- 11: FIN detecting unit
- 13: Key input unit
- 20: PPP control unit
- 21: LCP release-request transmitting unit
- 22: LCP release-request ACK detecting unit
- 23: LCP release-request transmission detecting unit
- 26: Timer
- 30: Wireless-line control unit
- 31: First selector
- 32: Second selector
- 33: Third selector
- 35: Status-information storage unit
- 37: Timer (timer unit)
- 40: Operation input monitoring unit
- 41: LCP release-request transmitting unit (transmit N times)
- 42: Reception electric-field intensity detecting unit
- 43: Transmission buffer
- 50: Transmission/reception signal managing unit
- 60: Input monitoring unit
- 70: Communication control unit
- 101, 102, and 103: Mobile terminal device (information processing apparatus)

### BEST MODE(S) FOR CARRYING OUT THE INVENTION

Exemplary embodiments of an information processing apparatus according to the present invention are described in details below with reference to the accompanying drawings. The present invention is not limited to these exemplary embodiments.

### First embodiment

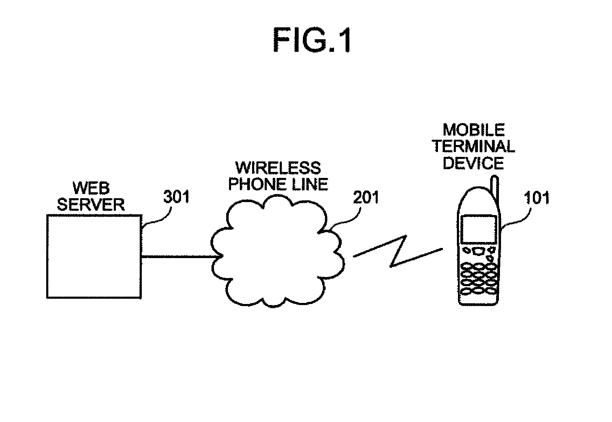

Fig. 1 is a diagram of an information processing apparatus according to a first embodiment of the present invention being connected to a network. The information processing apparatus is, specifically, a mobile terminal device 101 installed with an application used on the Internet, such as a browser and a mailer. The mobile terminal device 101 transmits or receives data by using a TCP (transmission control protocol) at the network layer. Moreover, the mobile terminal device 101 connects to or releases a link of a wireless line by using LCP (link control protocol) at the data link layer. The LCP is a protocol for controlling a link based on the PPP. In the embodiments, it is assumed that the mobile terminal device 101 is connected to a network system that includes a wireless phone line 201 and a Web server 301 with a time-based charging system.

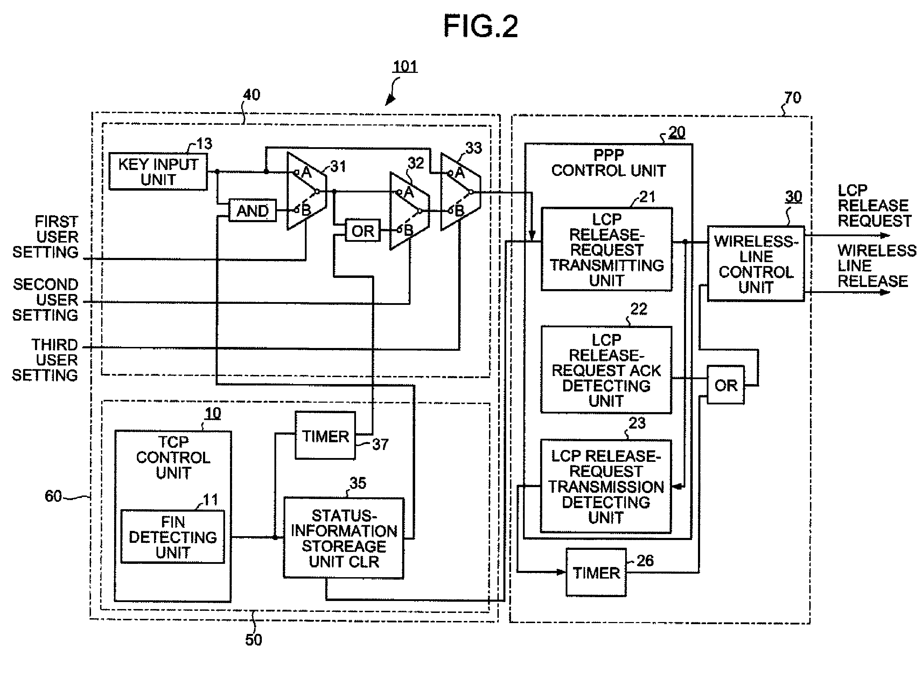

Fig. 2 is a functional block diagram of the mobile terminal device 101 according to the present embodiment. In Fig. 2, the mobile terminal device 101 includes an input monitoring unit 60 for monitoring an input signal input to the device, and a communication control unit 70 for controlling a communication line on the wireless phone line 201. The input monitoring unit 60 includes an operation input monitoring unit 40 that receives an operation input provided by a user and that monitors the input signal, and a transmission/reception signal managing unit 50 that transmits or receives packet data via the wireless phone line 201 and that monitors the transmitted/received data.

The transmission/reception signal managing unit 50 transmits or receives packet data via the wireless phone line 201 to or from the Web server 301, and includes a TCP control unit 10 that performs TCP control for controlling transmitting or receiving of the packet data. Moreover, the TCP control unit 10 includes a FIN detecting unit 11 that specially detects a packet transmission/reception completion signal (FIN signal) out of the received data from the Web server 301. The transmission/reception signal managing unit 50 additionally includes a status-information storage unit 35 that stores therein information indicative that the FIN signal has been received and a timer 37 as a timer unit that starts counting upon receipt of the FIN signal. The status stored by the status-information storage unit 35 is cleared when new packet data is transmitted or received.

The operation input monitoring unit 40 includes a key input unit 13 that is used by the user to provide a line-release operation input via a not-shown input key, and three selectors of a first, a second, and a third selectors 31, 32, and 33. Each of the three selectors 31, 32, and 33 selects input signal A or B, and outputs the selected signal to a following step. The selection can be switched by a first to a third user settings, those input from outside. The line-release operation input provided through the key input unit 13 is input as one of the input signals to each of the fires selector 31 and the third selector 33. An AND condition signal based on the line-release operation input and output of the status-information storage unit 35 is input to the first selector 31 as the other input signal. An output signal from the first selector 31 is input to the second selector 32 unchanged and an OR condition signal based on the output signal from the first selector 31 and a count-up signal from the timer 37 is also input to the second selector 32. An output of the second selector 32 and the line-release operation input are provided to the third selector 33.

The communication control unit 70 includes a PPP control unit 20 that performs a PPP-link line connecting control and a wireless-line control unit 30 that actually transmits various LCP commands for the line connecting control. The PPP control unit 20 includes an LCP release-request transmitting unit 21 that transmits a line-release request based on the LCP (LCP release request) for releasing a line for which connection established on the PPP link, an LCP release-request ACK detecting unit 22 that detects an LCP release-request ACK, that is, an ACK signal in response to the LCP release request, an LCP release-request transmission detecting unit 23 that detects that the own device has transmitted the LCP release request, and a timer 26 that is activated by the LCP release-request transmission detecting unit 23 triggered by transmission of the LCP release request.

The FIN signal stored in the status-information storage unit 35 and the output signal from the second selector 32 are input to the LCP release-request transmitting unit 21. Upon one of the two signals being input, the LCP release-request transmitting unit 21 transmits the LCP release request to the Web server 301. While being output to outside as described above, the LCP release request is also input to the LCP release-request transmission detecting unit 23 of the own device. The LCP release-request transmission detecting unit 23 detects the input, and activates the timer 26. An OR condition signal based on an ACK detection signal from the LCP release-request ACK detecting unit 22 and the count-up signal from the timer 26 is input to the wireless-line control unit 30. Upon one of the two signals is input, the wireless-line control unit 30 starts a wireless-line release procedure.

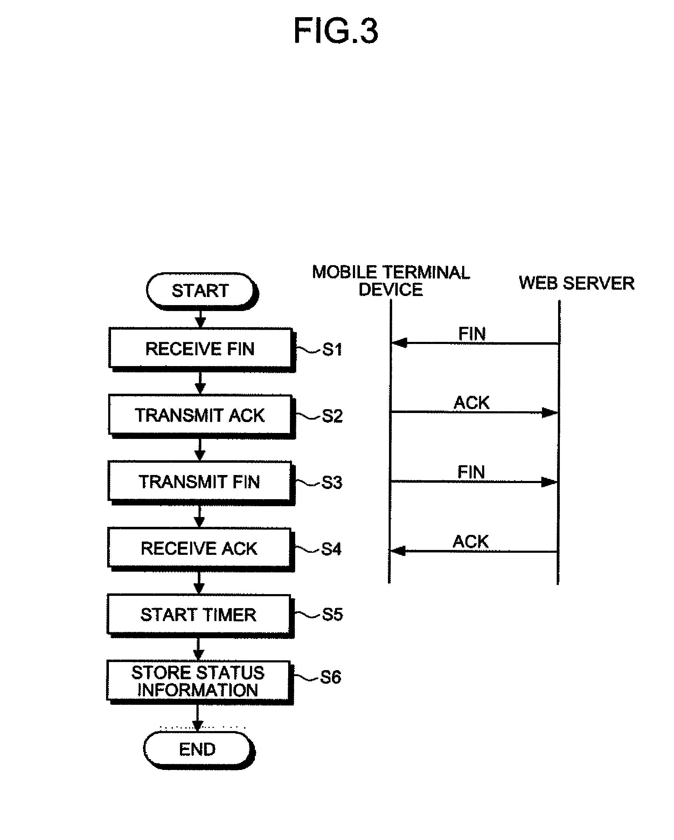

Operations are described below. Fig. 3 is a flowchart of the operation of the transmission/reception signal managing unit 50 upon receiving a packet transmission/reception completion signal (FIN signal), and a sequence chart of TCP control-signal exchange between the mobile terminal device 101 and the Web server 301 when the packet transmission/reception completion signal (FIN signal) is received. In the transmission/reception signal managing unit 50, the FIN detecting unit 11 monitors the packet transmission/reception completion signal (FIN signal) transmitted from the Web server 301 via the wireless phone line 201 at all times. When the FIN detecting unit 11 receives the FIN signal (step S1), the TCP control unit 10 transmits, as a response, an ACK signal to the Web server 301 (step S2), and subsequently transmits the FIN signal (step S3). The Web server 301 transmits an ACK signal in response to the FIN signal, and the TCP control unit 10 receives the ACK signal (step S4). After the sequence for receiving a series of the TCP packet transmission/reception completion signals, the TCP control unit 10 causes the timer 37 to start counting (step S5). In addition, a signal indicative that the packet transmission/reception is complete is stored in the status-information storage unit 35 from the Web server 301 (step S6). The stored status is cleared when new packet data is transmitted or received.

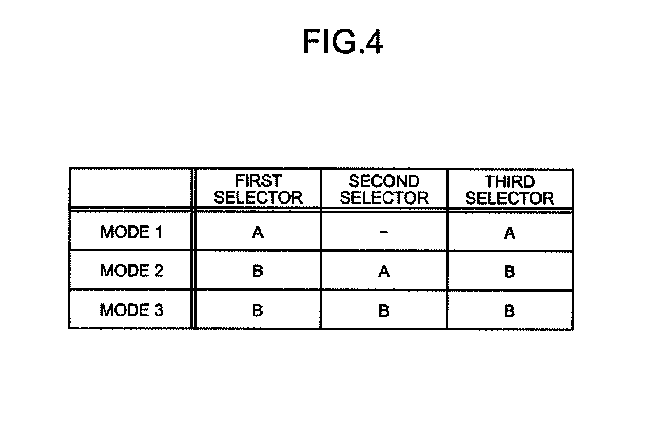

The mobile terminal device 101 includes the first, the second and the third selectors 31, 32, and 33 as mode selecting units, and performs the line-release operation according to one of the following three modes selected by the first to third user settings. A relation between the modes and the first to third selectors 31, 32, and 33 is depicted in Fig. 4. Operations according to Mode 1 to Mode 3 are as follows:

Mode 1: (Where the first selector 31 is set to A side, and the third selector 33 is set to A side,) the line is released by the line-release operation input provided by the user. When the settings are selected, the line can be disconnected by the line-release operation input regardless of termination or non-termination of a packet transmitting/receiving.

Mode 2: (Where the first selector 31 is set to B side, the second selector 32 is set to A side, and the third selector 33 is set to B side,) if the line-release operation input is provided by the user and the packet transmission/reception completion signal (FIN signal) is detected, the line is released.

Mode 3: (Where the first selector 31 is set to B side, the second selector 32 is set to B side, and the third selector 33 is set to B side,) in addition to the operation at Mode 2, if the packet data transmitting/receiving is not performed for a predetermined period, the line is released.

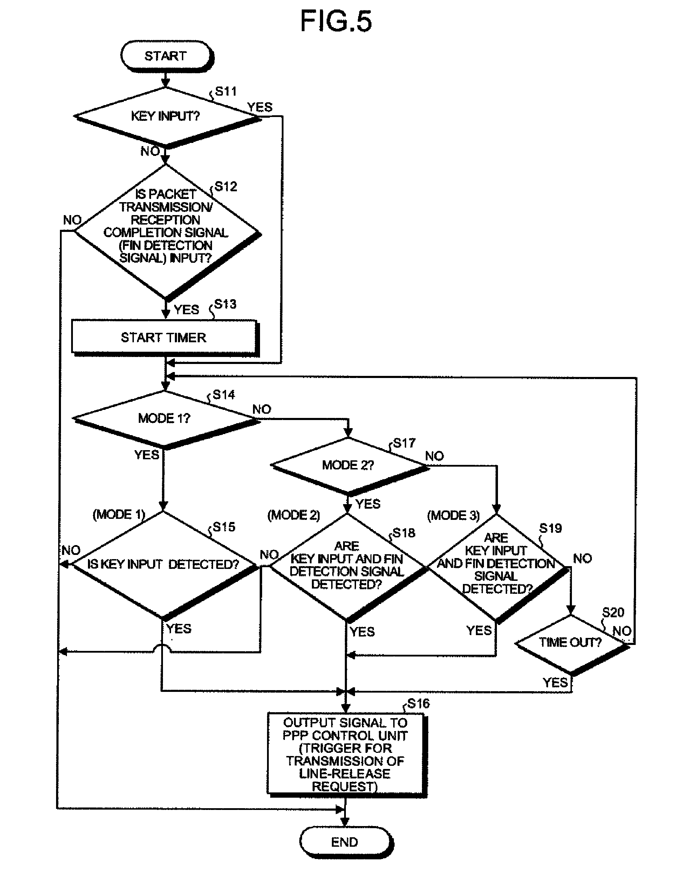

Fig. 5 is a flowchart of the operation of the operation input monitoring unit 40. The operation of the operation input monitoring unit 40 shown in Fig. 2 is explained with reference to the flowchart shown in Fig. 5. In Fig. 5, first, it is determined whether line-release operation input is provided through the key input unit 13 (hereinafter, simply refereed to as "key input") (step S11). When the key input is provided, the process control jumps to step S14 at which a mode determination is performed. On the other hand, when the key input is not provided, it is determined whether the packet transmission/reception completion signal (FIN signal) is stored in the status-information storage unit 35 (step S12). When the FIN signal is not stored, the process control exits the loop. On the other hand, when the FIN signal is stored in the status-information storage unit 35, the timer 37 starts counting (step S13). Then, the process control goes to the mode determination at step S14.

At the step of the mode determination, it is determined whether Mode 1 is set (step S14). When Mode 1 is set, it is determined whether a condition that key input is provided is satisfied (step S15). When the key input is provided, the process control goes to step S16, and a signal that triggers transmission of the line-release request is output to the communication control unit 70. On the other hand, when Mode 1 is not set at step S14, it is determined whether Mode 2 is set (step S17). When Mode 2 is set, it is determined whether another condition that key input and an FIN signal are detected is satisfied (step S18). When the condition is satisfied, the process control goes to step S16, and the signal that triggers transmission of the line-release request is output to the PPP control unit 20. When Mode 2 is not set at step S17, that is, it is assumed that Mode 3 is set, it is determined at step S19 whether the condition that key input and an FIN signal are detected is satisfied. When the condition is satisfied, the process control goes to step S16, and the signal that triggers transmission of the line-release request is output to the PPP control unit 20. On the other hand, when the condition is not satisfied at step S19, it is determined whether a period counted by the timer 37 reaches a predetermined count value (step S20). When the period reaches the predetermined count value, the process control goes to step S16, and the signal that triggers the transmission of line-release request is output to the PPP control unit 20. When the period does not reach the predetermined count value, the process control returns to step S14.

A computer program, i.e., a line-release program can be executed to implement the operation of the transmission/reception signal managing unit 50 upon receiving the packet transmission/reception completion signal (FIN signal) as depicted in the flowchart of Fig. 3 and the operation of the operation input monitoring unit 40 as depicted in the flowchart of Fig. 5. In this case, the line-release program stored in a not-shown recording device such as a memory is executed by a not-shown CPU. Settings on the selectors 31, 32, and 33 can be stored in the recording device such as a memory. If the settings are stored, the mode can be switched by changing the settings on the memory.

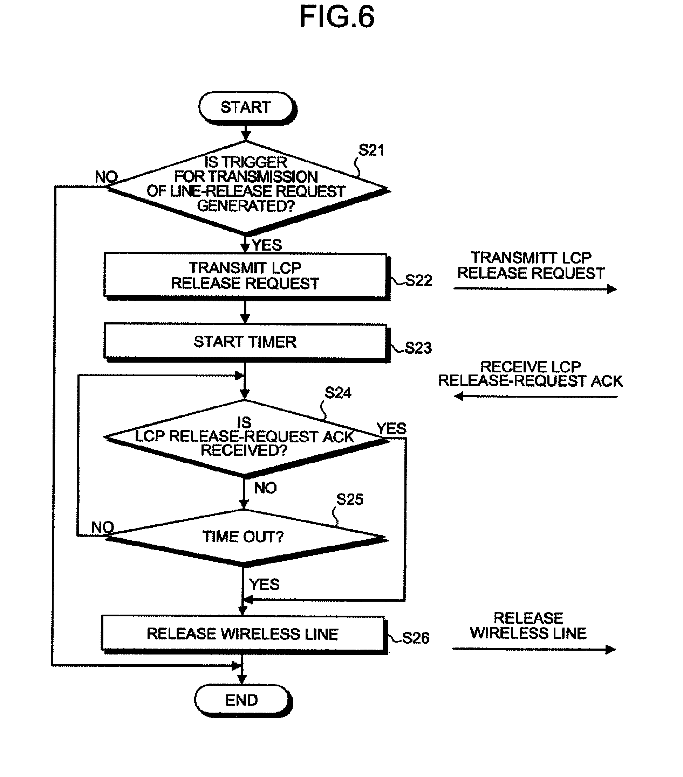

Fig. 6 is a flowchart of the operation of the communication control unit 70 when such a signal is received that triggers transmission of the line-release request to the PPP control unit 20. The operation of the communication control unit 70 shown in Fig. 2 is explained with reference to the flowchart shown in Fig. 6. The LCP release-request transmitting unit 21 determines whether there is any one of an output signal from the second selector 32 and a FIN signal that is in a state stored by the status-information storage unit 35, that is, whether there is the trigger for transmission of the line-release request (step S21). If any, the LCP release-request transmitting unit 21 transmits the LCP release request to the Web server 301 that performs the PPP termination control (step S22). The LCP release-request transmission detecting unit 23 detects the transmission of the LCP release request from its own device, and causes the timer 26 to start counting (step S23).

Upon receiving the LCP release request, the Web server 301 performs the operation of the line release, and returns the LCP release-request ACK as a response. The LCP release-request ACK detecting unit 22 detects the ACK signal (step S24). Upon the PPP control unit 20 receiving the ACK signal, the process control goes to step S26 to start the wireless-line release procedure via the wireless-line control unit 30. On the other hand, the timer 26 determines whether the predetermined period has passed since the transmission of the LCP release request from its own device (step S25). When the LCP release-request ACK is not received within the predetermined period, the wireless-line release procedure is started (step S26).

The trigger for transmitting the line-release request is generated from either the detection of the LCP release by the LCP release-request ACK detecting unit 22 or the count-up signal based on the timer 26 of the LCP release-request transmission detecting unit. This is because, for example, if a radio wave condition of the wireless line is poor, there is a possibility that the LCP release request is not carried to the network (Web server 301) side. Moreover, even though the LCP release request has been carried to the Web server 301, there is a possibility that the mobile terminal device 101 cannot receive the LCP release-request ACK in response to the LCP release request. Even if such an event occurs, it is possible to cause the wireless-line release procedure to start using the operation by the timer 26 without waiting the LCP release-request ACK. A computer program, i.e., a line-release program can be executed to realize the operation of the communication control unit 70 as depicted in the flowchart of Fig. 6.

In the mobile terminal device 101 with such a configuration, the input monitoring unit 60 monitors the line-release operation input and the packet transmission/reception completion, and when at least one of the two is detected, generates the trigger. The communication control unit 70 release, when the trigger generates, the wireless line. Therefore, it is possible to highly reliably release the line when the line is unnecessary to be connected, which makes it possible to reduce an unnecessary charge.

Although the information processing apparatus according to the present embodiment is the mobile terminal device 101 configured to be connected to the Web server 301 via the wireless phone line 201, the line is not limited to the wireless line. The present invention can be applied to a line using a wire.

### Second embodiment

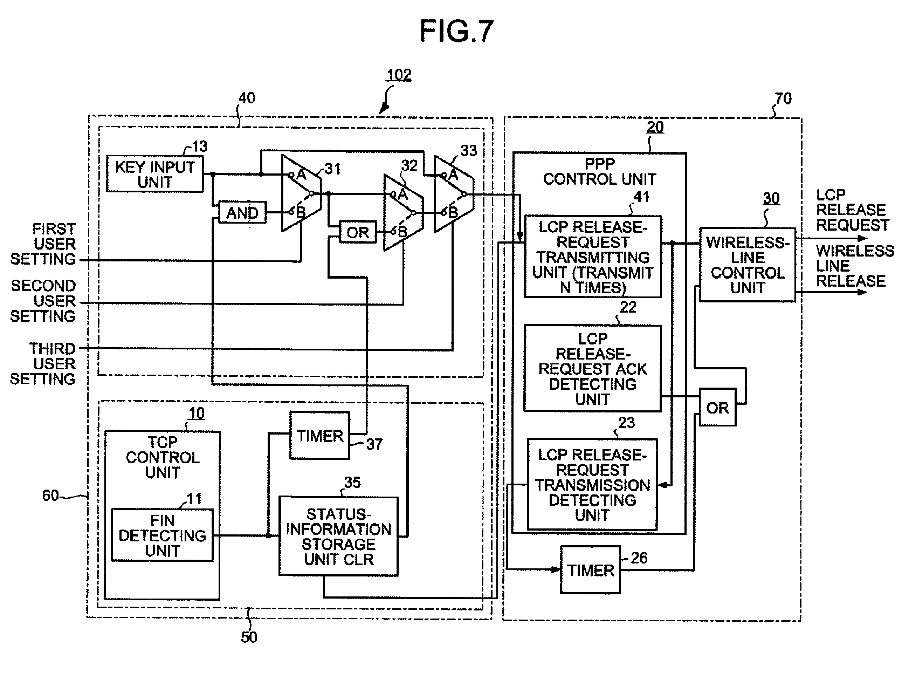

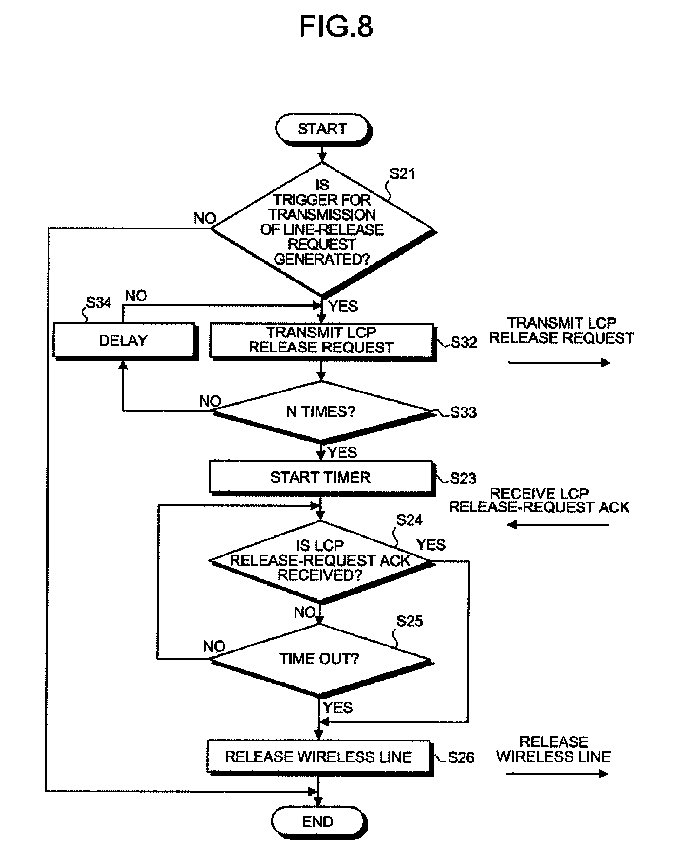

Fig. 7 is a functional block diagram of a mobile terminal device according to a second embodiment of the present invention. Fig. 8 is a flowchart of the operation of the communication control unit when such a signal is received that triggers transmission of the line-release request to the PPP control unit of the mobile terminal device according to the present embodiment. In a mobile terminal device 102 according to the present embodiment, a LCP release-request transmitting unit 41 transmits the LCP release request several times at predetermined time intervals in response to the single trigger generated by the input monitoring unit 60. In other words, as shown in steps S32 to S34 in Fig. 8, if there is the trigger for transmission of the line-release request, the LCP release request is transmitted to the Web server 301 (step S32). If the LCP release request has not yet been transmitted predetermined times (step S33), after a predetermined time (step S34), the process control returns to step S32, and the LCP release request is transmitted again.

According to the present embodiment, it is possible to avoid the case where the LCP release request is not carried from the mobile terminal device 102 to the network (Web server 301) side, by transmitting the LCP release request several times at predetermined intervals. Other configuration is similar to that according to the first embodiment. The LCP release request is transmitted, for example, three times at 5-second intervals based on an assumed situation that a vehicle is passing through a (150-meter long) tunnel. The vehicle running at 60 kilometers per hour requires about nine seconds for having passed through the 150-meter long tunnel. If the signal is transmitted three times at 5-second intervals, it takes 10 seconds to transmit the signal from the first to the last transmissions. Accordingly, it is not happens that the tunnel blocks off all of the release requests.

Upon receiving the LCP release request, the network (web server 301) side releases the wireless line that is allocated to the mobile terminal device 102. If the first release request is carried to the Web server 301 and a response to the LCP release request from the Web server 301 is not carried to the mobile terminal device 102, the second LCP release request is transmitted from the mobile terminal device 102. However, the second or later LCP release request is treated by the network (Web server 301) side as a request from a terminal with an illegal IP address, and is discarded silently. Therefore, there happens no systematical problem. Such a configuration increases a possibility of the LCP release request having been carried. The case of 3-time transmission with 5-second intervals is one of examples. Not limited to the above number and interval, and any number and interval can be selected. Third embodiment

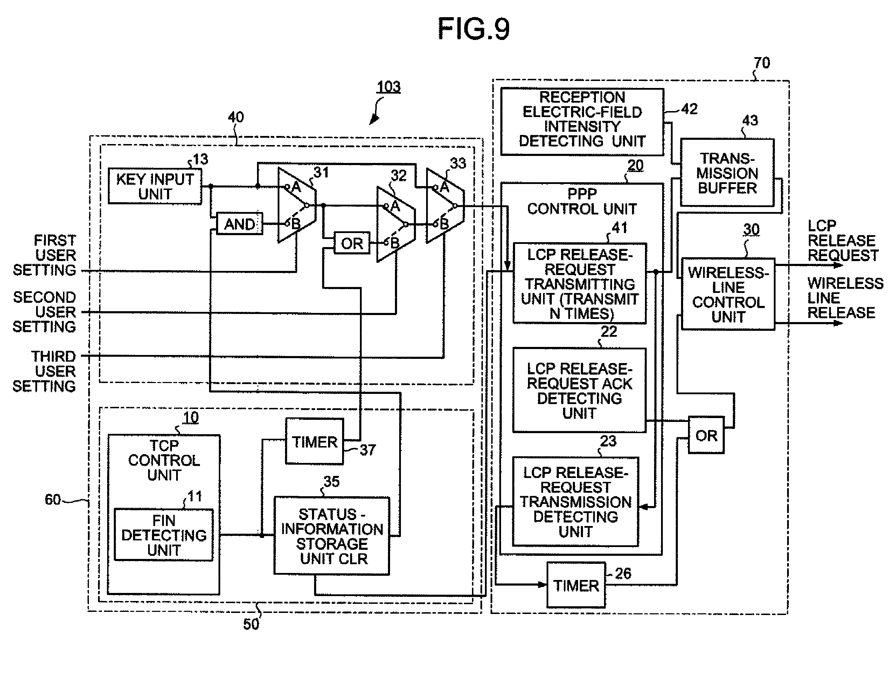

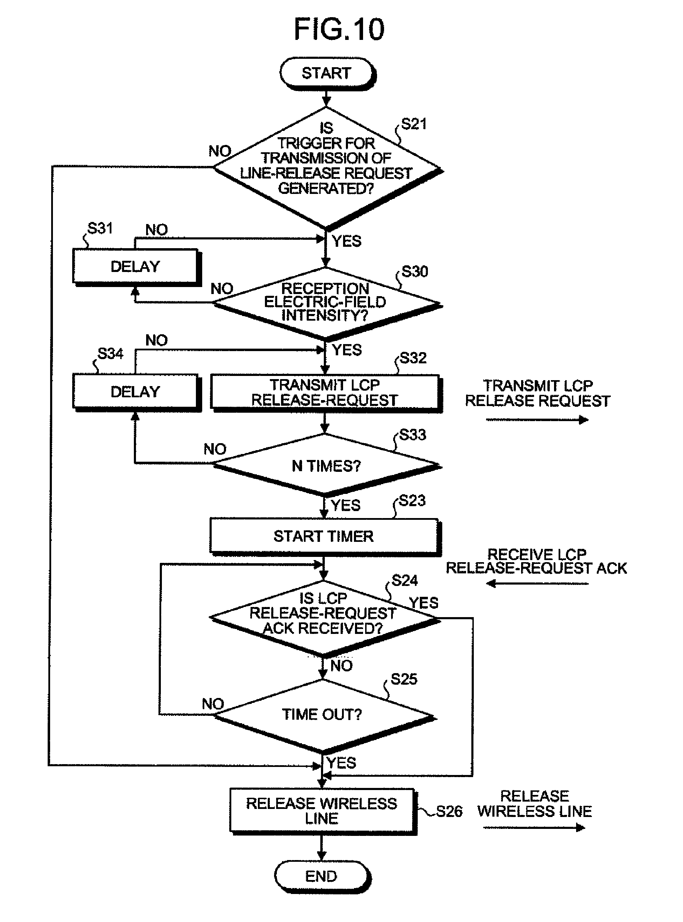

Fig. 9 is a functional block diagram of a mobile terminal device according to a third embodiment of the present invention. Fig. 10 is a flowchart of the operation of the communication control unit when such a signal is received that triggers transmission of the line-release request to the PPP control unit of the mobile terminal device according to the present embodiment. In addition to the configuration according to the second embodiment, the communication control unit 70 of a mobile terminal device 103 according to the present embodiment includes a reception electric-field intensity detecting unit 42 and a transmission buffer 43. The transmission buffer 43 buffers the line-release request generated by the LCP release-request transmitting unit 21. The reception electric-field intensity detecting unit 42 measures an electric-field intensity of received radio waves (step S30 in Fig. 10), and waits until the electric-field intensity is at or above the threshold (step S31 in Fig. 10). When the electric-field intensity is at or above the threshold, the line-release request buffered by the transmission buffer 43 is transmitted. Other configuration is similar to that according to the second embodiment.

In the mobile terminal device 103 with such a configuration, the reception electric-field intensity detecting unit 42 grasps a surrounding radio wave condition, and transmits, when the radio wave condition turns to be good, the line-release request buffered in the transmission buffer 43. This makes it possible to reduce the unnecessary connection period even in a poor radio wave condition as much as possible, which results in reducing an unnecessary charge.

### INDUSTRIAL APPLICABILITY

As set forth hereinabove, an information processing apparatus according to the present invention is suitably used as an information processing apparatus to be connected to a network system in which line connection is established using PPP, and charge is based on a connection period from establishment to release of the line connection. An information processing apparatus according to the present invention is particularly effective when applied to a device such as a mobile phone installed with an application used on the Internet, such as a browser and a mailer.

## Claims

1. An information processing apparatus configured to be connected, as a result of a line connection by using a PPP, to a network system in which charge is based on a connection period from establishment of the line connection to release of a line, the information processing apparatus comprising:
an input monitoring unit that monitors a line-release operation input signal and a packet transmission/reception completion signal; and
a communication control unit that releases the line, upon receiving at least one of the line-release operation input signal and the packet transmission/reception completion signal.

2. The information processing apparatus according to claim 1, further comprising a timer unit that counts time since packet transmission/reception is complete, wherein
the input monitoring unit releases the line, when a predetermined period has passed since the packet transmission/reception is complete, regardless of whether the line-release operation input signal is received.

3. The information processing apparatus according to claim 1 or 2, wherein
the input monitoring unit generates a trigger upon receiving at least one of the line-release operation input signal and the packet transmission/reception completion signal, and
the communication control unit transmits a plurality of line-release requests at predetermined intervals in response to the trigger.

4. The information processing apparatus according to claim 1 or 2, wherein
the line is a wireless line, and
the communication control unit measures an electric field intensity of a received radio wave, and, when the electric field intensity is equal to or larger than a threshold, releases the line.

5. The information processing apparatus according to claim 4, wherein the communication control unit includes
a transmission buffer that buffers a line-release request; and
a reception electric-field intensity detecting unit that measures the electric field intensity of the received radio wave, and transmits, when the electric field intensity is equal to or larger than the threshold, the line-release request buffered by the transmission buffer.

6. A line release program for an information processing apparatus configured to be connected, as a result of a line connection by using a PPP, to a network system in which charge is based on a connection period from establishment of the line connection to release of a line, the line release program describing a procedure comprising:
monitoring a line-release operation input signal and a packet transmission/reception completion signal based on an output signal from an input monitoring unit that monitors the line-release operation input signal and the packet transmission/reception completion signal, and, when at least one of the line-release operation input signal and the packet transmission/reception completion signal is received, releasing the line.

7. The line release program for the information processing apparatus according to claim 6, further describing a procedure of counting time since packet transmission/reception is complete, and, when a predetermined period has passed since the packet transmission/reception is complete, releasing the line, regardless of whether the line-release operation input signal is received.

8. The line release program for the information processing apparatus according to claim 6 or 7, further describing a procedure of transmitting a plurality of line-release requests at predetermined intervals when at least one of the line-release operation input signal and the packet transmission/reception completion signal is received.

9. The line release program for the information processing apparatus according to claim 6 or 7, wherein
the line is a wireless line, and
the line release program further describes a procedure of reading a result of detection by an reception electric-field intensity detecting unit that measures an electric field intensity of a received radio wave, and, when the reception electric-field intensity is equal to or larger than a threshold, releasing the line.

10. The line release program for the information processing apparatus according to claim 9, further describing a procedure of buffering a line-release request in a transmission buffer, and, when the electric-field intensity is equal to or larger than the threshold, transmitting the line-release request that is buffered in the transmission buffer.

11. A line-release method for an information processing apparatus configured to be connected, as a result of a line connection by using a PPP, to a network system in which charge is based on a connection period from establishment of the line connection to release of a line, the line-release method comprising:
monitoring a line-release operation input signal and a packet transmission/reception completion signal based on an output signal from an input monitoring unit that monitors the line-release operation input signal and the packet transmission/reception completion signal, and, when at least one of the line-release operation input signal and the packet transmission/reception completion signal is received, releasing the line.

12. The line-release method for the information processing apparatus according to claim 11, further comprising counting time since packet transmission/reception is complete, and, when a predetermined period has passed since the packet transmission/reception is complete, releasing the line, regardless of whether the line-release operation input signal is received.

13. The line-release method for the information processing apparatus according to claim 11 or 12, further comprising transmitting a plurality of line-release requests at predetermined intervals when at least one of the line-release operation input signal and the packet transmission/reception completion signal is received.

14. The line-release method for the information processing apparatus according to claim 11 or 12, wherein
the line is a wireless line, and
the line release method further comprising reading a result of detection by an reception electric-field intensity detecting unit that measures an electric field intensity of a received radio wave, and, when the reception electric-field intensity is equal to or larger than a threshold, releasing the line.

15. The line-release method for the information processing apparatus according to claim 14, further comprising buffering a line-release request in a transmission buffer, and, when the electric-field intensity is equal to or larger than the threshold, transmitting the line-release request that is buffered in the transmission buffer.
